# EUROPÄISCHE PATENTSCHRIFT

(11) **EP 3 708 265 B1**
(45) Veröffentlichungstag und Bekanntmachung des Hinweises auf die Patenterteilung: **16.06.2021**
(21) Anmeldenummer: 19161801.6
(22) Anmeldetag: 11.03.2019
(51) Int. Cl.: B07C 7/00

(54) **SORTIERUNGSERFASSUNGSSYSTEM ZUM ERFASSEN EINES PASSIERENS EINES OBJEKTES DURCH EINE VON MEHREREN ÖFFNUNGEN**
SORTING DETECTION SYSTEM FOR DETECTION OF AN OBJECT PASSING THROUGH ONE OF A PLURALITY OF OPENINGS
SYSTÈME DE DÉTECTION DE TRI PERMETTANT DE DÉTECTER UN PASSAGE D'UN OBJET À TRAVERS UNE OUVERTURE D'UNE PLURALITÉ D'OUVERTURES

(43) Veröffentlichungstag der Anmeldung: 16.09.2020
(73) Patentinhaber: SICK AG, 79183 Waldkirch (DE)
(72) Erfinder: Schröder, Robert, 79199 Kirchzarten (DE)

(56) Entgegenhaltungen:
- US-B1- 7 516 848

## Beschreibung

Die vorliegende Erfindung betrifft ein Sortierungserfassungssystem, das ein Passieren eines Objektes durch eine von mehreren Öffnungen erfasst, nach dem Oberbegriff des Anspruchs 1.

Bei Brief- und Paketdienstleister werden Objekte, die Briefe, Päckchen oder Pakete umfassen, in eine Vielzahl von Behältern sortiert, wobei jeder Behälter jeweils eine eigene Öffnung aufweist. Hierbei werden die Objekte nach einer Identifizierung in Richtung der jeweiligen Öffnungen der zu den identifizierten Objekten zugeordneten Behältern manuell oder automatisiert befördert, so dass die Objekte in die jeweiligen für die Objekte vorgesehenen Behälter hineinfallen. Hierdurch werden die Objekte in die Behälter sortiert.

Diese Sortierung weist jedoch den Nachteil auf, dass ein Passieren des Objektes durch die für das Objekt vorgesehene Öffnung des zugeordneten Behälters nicht sicher und eindeutig erfasst werden kann, so dass ein fehlerhaftes Sortieren des Objektes bzw. ein Hineinfallen des Objektes in einen falschen Behälter unbemerkt auftreten kann.

Das falsche Sortieren kann beispielsweise dadurch zustande kommen, dass das beförderte Objekt auf eine Kante zwischen zwei Öffnungen auftrifft und darauffolgend durch die falsche Öffnung in den falschen Behälter hineinfällt. Es kann beispielsweise auch dadurch eintreten, dass Bedienpersonal das Objekt falsch identifiziert oder in Richtung eines falschen Behälters befördert.

Aus US 7,516,848 B1 ist ein Sortierungserfassungssystem gemäß den Merkmalen des Oberbegriffs des Anspruchs 1 bekannt. Insbesondere wird in dem bekannten Sortierungserfassungssystem in jedem Behälter jeweils ein Bewegungssensor vorgesehen, so dass ein Hineinlegen bzw. Herausnehmen einer Komponente aus dem jeweiligen Behälter erfasst werden kann.

Es ist daher eine Aufgabe der vorliegenden Erfindung, ein Sortierungserfassungssystem der eingangs genannten Art derart zu verbessern, dass eine korrekte Sortierung bzw. ein korrektes Passieren des Objektes durch die vorgesehene Öffnung sicher erfasst wird, wobei das Sortierungserfassungssystem preisgünstig aufgebaut ist.

Die Aufgabe wird erfindungsgemäß durch ein Sortierungserfassungssystem mit den Merkmalen des Anspruchs 1 gelöst.

Die Erfindung hat den Vorteil, dass ein durch die Öffnung befördertes Objekt exakt dem zu der Öffnung gehörenden Behälter zugeordnet werden kann. Das heißt mit anderen Worten, wenn das Objekt auf eine Kante zwischen zwei Öffnungen auftrifft, kann das erfindungsgemäße Sortierungserfassungssystem exakt bestimmen, durch welche Öffnung bzw. in welchem der Öffnung zugehörigen Behälter das Objekt letztendlich gefallen ist, nachdem das Objekt die Detektionsfläche innerhalb des Behälters passiert hat. Ferner weisen die gewählten zweiten Sensoren ein Sichtfeld auf, das sehr gut parametrisierbar bzw. einstellbar ist, so dass die Detektionsfläche eindeutig innerhalb der Behälter definiert werden kann.

Hierbei ist durch eine Parametrierung der Detektionsfläche unterhalb des Randes der Öffnungen sicher gewährleistet, dass ein unumkehrbarer Eingang des Objektes in den jeweiligen Behälter erfasst wird. In diesem Zusammenhang bedeutet Parametrierung der Detektionsfläche, dass das Bedienpersonal zum Einrichten des Sortierungserfassungssystems eine Tiefe der Detektionsfläche innerhalb der Behälter bzw. unterhalb der Öffnungen je nach Bedarf frei vorgeben kann, so dass beispielsweise auch ein umfangsmäßig größeres Objekt erst das Erfassungssignal auslöst, wenn es sich bereits so weit unterhalb der Öffnung und damit innerhalb des Behälters befindet, dass es nur in diesem Behälter fallen kann.

Gemäß einem bevorzugten Ausführungsbeispiel umfasst der erste Sensor einen Scanner, einen Barcodelese-Sensor, eine 2D-Kamera oder ein RFID-Lesegerät
Gemäß einem weiteren bevorzugten Ausführungsbeispiel aktiviert die Steuereinheit anhand des Identifizierungssignals eine optische Anzeige an dem zugeordneten Behälter oder ein Projektor indiziert die zugeordnete Öffnung, um die Zuordnung des identifizierten Objektes zu dem jeweiligen Behälter optisch anzuzeigen. Hierdurch ist ein klarer optischer Bezug zwischen dem identifizierten Objekt und dem zugeordneten Behälter für das Bedienpersonal bereitstellbar. Vorteilhafterweise wertet die Steuereinheit das Identifizierungssignal und das Erfassungssignal aus, um ein erstes Sortierungssignal zu erzeugen, das eine korrekte Sortierung des Objektes in einen dem Objekt zugeordneten Behälter wiedergibt, wenn das Objekt in einem ihm zugeordneten Behälter das Erfassungssignal auslöst. Weiterhin ist es vorteilhaft, dass die Steuereinheit das Identifizierungssignal und das Erfassungssignal auswertet, um ein zweites Sortierungssignal zu erzeugen, das eine falsche Sortierung des Objektes wiedergibt, wenn das Objekt in einem anderen als dem ihm zugeordneten Behälter das Erfassungssignal auslöst. Vorzugsweise aktiviert die Steuereinheit anhand des Sortierungssignals eine optische Anzeige an dem das Objekt aufgenommenen Behälters oder ein Projektor indiziert anhand des Sortierungssignals die jeweilige Öffnung des das Objekt aufgenommenen Behälters, um die Sortierung des Objektes in diesem Behälter optisch als korrekt oder falsch anzuzeigen.

Hierdurch ist dem Bedienpersonal nicht nur die optische Möglichkeit zum Nachverfolgen der Sortierung des identifizierten Objektes gegeben, sondern das Sortierungserfassungssystem stellt dem Bedienpersonal die Möglichkeit bereit, durch die einfache optische Nachverfolgung und die sichere Erfassung einer möglichen falschen Sortierung des Objektes die falsche Sortierung rückgängig zu machen. Das erste Sortierungssignal kann beispielsweise eine Aktivierung einer grünen Lampe auslösen und das zweite Sortierungssignal kann beispielsweise die Aktivierung einer roten Lampe auslösen.

Ferner ist gemäß einem bevorzugten Ausführungsbeispiel das Objekt nach der Identifizierung manuell oder automatisiert in Richtung des zugeordneten Behälters beförderbar. Hierdurch ist eine schnelle und fehlersichere Sortierung der Objekte unter einer sicheren Überwachung durch das Sortierungserfassungssystem möglich. Vorzugsweise gehört der Behälter zu einem Logistikregal mit mehreren Behältern, die auf einer gleichen Ebene oder auf unterschiedliche Ebenen zueinander angeordnet sind. Dies bedeutet, dass das Sortierungserfassungssystem eine raumabdeckende Überwachung aller Öffnungen der Behälter ermöglicht, so dass eine flexible Anordnung des zweiten Sensors gegenüber den Behältern möglich ist.

Weiterhin ist gemäß einem bevorzugten Ausführungsbeispiel der zweite Sensor derart ausgebildet, dass das durch das Sichtfeld beförderte Objekt mit diesem identifizierbar ist. Hierdurch ist es vorteilhafterweise möglich, dass das Objekt durch den zweiten Sensor einer Identifizierung unterzogen wird. Das heißt, dass die Identifizierung des Objektes durch den ersten Sensor entweder überprüft oder, falls die Identifizierung aus welchen Gründen auch immer ausblieb, durch den zweiten Sensor ausgeführt werden kann.

Gemäß einem weiteren bevorzugten Ausführungsbeispiel sind die Öffnungen in unterschiedlichen Entfernungen zu dem zweiten Sensor angeordnet, wobei vorteilhafterweise der zweite Sensor derart eingestellt ist, dass jeder Behälter jeweils seine individuell eingestellte Detektionsfläche aufweist. Damit ist eine hohe Flexibilität für eine Anordnung des zweiten Sensors gegenüber den Behältern gegeben, so dass ein Aufbau des Sortierungserfassungssystems bzw. eine Integration des Sortierungserfassungssystems in ein bestehendes Logistiklager vereinfacht ist. Insbesondere weisen die individuellen Detektionsflächen im Vergleich zueinander gleich oder unterschiedlich große Abstände zu der Öffnung ihres jeweiligen Behälters auf, wodurch eine hohe Flexibilität bei der Parametrisierung des Sortierungserfassungssystems bzw. der Detektionsfläche gegeben ist.

Vorteilhafterweise bildet die Detektionsfläche des zweiten Sensors eine plane, zweidimensionale Ebene, so dass eine einfache Ausrichtung des zweiten Sensors zu den Öffnungen der Behälter möglich ist.

Ferner ist gemäß einem bevorzugten Ausführungsbeispiel die Identifizierung des Objektes anhand eines optischen Markers, insbesondere einem Barcode, an dem Objekt, eines strukturellen Merkmals des Objektes und/oder eines RFID-Chips an dem Objekt durchführbar. Hierdurch ist eine schnelle und sichere Identifizierung des Objektes durch den ersten und/oder zweiten Sensor gewährleistet.

Das erfindungsgemäße System kann auf ähnliche Weise durch weitere Merkmale ausgestaltet werden und zeigt dabei ähnliche Vorteile. Derartige weitere Merkmale sind beispielhaft, aber nicht abschließend, in den sich an den unabhängigen Anspruch anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Darstellung eines ersten bevorzugten Ausführungsbeispiels eines erfindungsgemäßen Sortierungserfassungssystems, und
- Fig.2: eine schematische Darstellung eines zweiten bevorzugten Ausführungsbeispiels des erfindungsgemäßen Sortierungserfassungssystems.

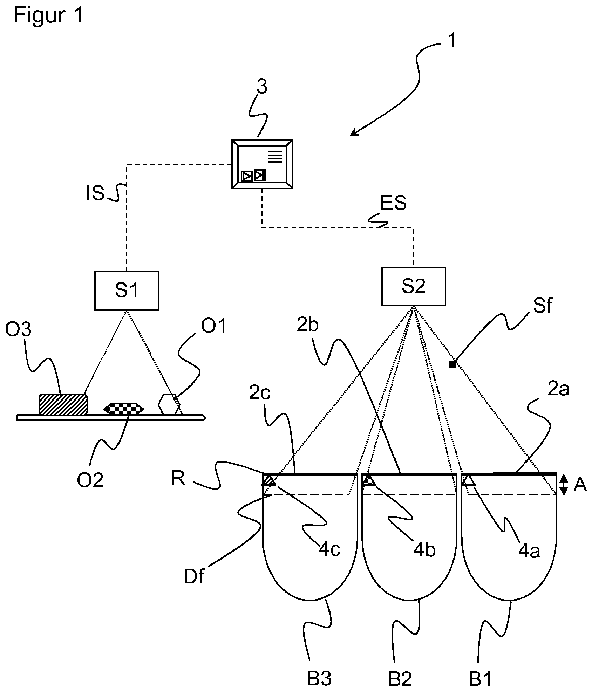

In der Figur 1 ist schematisch ein erstes bevorzugtes Ausführungsbeispiel eines erfindungsgemäßen Sortierungserfassungssystems 1 dargestellt, mit dem eine Sortierung von Objekten O1 bis O3 in entsprechend für die jeweiligen Objekte O1 bis O3 vorgesehenen Behälter B1 bis B3 durchgeführt wird. Hierbei stellen die Objekte O1 bis O3 beispielweise Postzustellungen dar, die in entsprechend postleitzahlzugeordnete Zustellungsbehälter einzusortieren sind. Die Objekte O1 bis O3 könnten auch unterschiedliche industriell gefertigte Teile sein, die ebenfalls in entsprechend vorgesehene Teilebehälter einsortiert werden.

Jeder Behälter B1, B2 und B3 weist jeweils eine Öffnung 2a, 2b und 2c mit einem Rand R auf, wobei die Behälter B1 bis B3 nebeneinander auf eine gleiche Ebene angeordnet sind, so dass die Öffnungen 2a bis 2c ein Feld mit mehreren Durchgangsmöglichkeiten zu den Behältern B1 bis B3 für die Objekte O1 bis O3 bilden.

Das Sortierungserfassungssystem 1 umfasst zumindest einen ersten Sensor S1, der dafür vorgesehen ist, die ankommenden Objekte O1 bis O3 zu identifizieren und jeweils ein entsprechendes Identifizierungssignal IS zu erzeugen. Vorteilhafterweise identifiziert der erste Sensor S1 die Objekte O1 bis O3 anhand eines optischen Markers, beispielsweise einem Barcode, an dem Objekt O1, O2 und O3, eines strukturellen Merkmals des Objektes O1, O2 und O3 oder eines RFID Chips an dem Objekt O1, O2 und O3. Für eine ganz sichere Identifizierung der Objekte O1 bis O3 könnten auch gleichzeitig eine Erfassung des optischen Markers und eine Erfassung des strukturellen Merkmals durchgeführt werden, so dass ein Abgleich zwischen den beiden Erfassungen möglich wäre.

Die Identifizierung der Objekte O1 bis O3 kann entweder, wie dargestellt, automatisiert oder auch manuell durchgeführt werden, wobei bei der manuellen Identifizierung Bedienpersonal die Objekte O1 bis O3 beispielweise unter den ersten Sensor S1 hält und dann in Richtung der Behälter B1 bis B3 weiterbefördert.

Der erste Sensor S1 übermittelt das Identifizierungssignal IS an eine Steuereinheit 3, die das Identifizierungssignal IS des ersten Sensors S1 erhält und das identifizierte Objekt O1, O2 und O3 anhand des Identifizierungssignals IS einem Behälter B1, B2 und B3 zuordnet. Hierbei aktiviert die Steuereinheit 3 vorzugsweise anhand des Identifizierungssignals IS bzw. der durchgeführten Zuordnung eine optische Anzeige 4a, 4b und 4c an dem zugeordneten Behälter B1, B2 und B3, so dass die Zuordnung des als nächsten einzusortierenden Objektes O1 zu dem entsprechenden Behälter B1 auch optisch erkennbar ist. Das heißt beispielsweise, die Anzeige 4a an dem für das identifizierte Objekt O1 vorgesehenen Behälter B1 leuchtet auf, während die Anzeige 4b und 4c der anderen Behälter B2 und B3 ausgeschaltet bleiben.

In diesem Zusammenhang umfasst die Steuereinheit 3 beispielsweise eine programmierbare Speichereinheit, eine sogenannte *"electronic control unit ECU"* bzw. *"central processing unit CPU".*

Nach der Identifizierung und Zuordnung der Objekte O1 bis O3 werden die Objekte O1 bis O3 in Richtung der entsprechenden jeweiligen Behälter B1 bis B3 befördert, wobei die Beförderung automatisiert oder manuell ausgeführt werden kann.

Zumindest ein zweiter Sensor S2 mit einem Sichtfeld Sf ist vorgesehen, der derart in Richtung der Behälter B1 bis B3 angeordnet ist, dass das Sichtfeld Sf auf die Öffnungen 2a bis 2c der Behälter B1 bis B3 gerichtet ist und wenigstens eine Detektionsfläche Df umfasst. Hierbei erfasst das Sichtfeld Sf insbesondere einen dreidimensionalen (3D-) Raum.

Erfindungsgemäß ist der zweite Sensor S2 derart eingestellt, dass die Detektionsfläche Df des zweiten Sensors S2 mit einem vorgegebenen Abstand A zu einem Rand R einer jeweiligen Öffnung 2a, 2b und 2c innerhalb des jeweiligen Behälters B1, B2 und B3 liegt. Insbesondere bildet die Detektionsfläche Df eine gerade zweidimensionale (2D-) Ebene innerhalb der Behälter B1 bis B3.

Das heißt, der zweite Sensor S2 erfasst das Objekt O1, O2 und O3 nicht nur bis zum Rand R der Öffnungen 2a bis 2c der Behälter B1 bis B3, sondern auch nach der jeweiligen Öffnung 2a, 2b und 2c, wenn sich das Objekt O1, O2 und O3 bereits innerhalb des Behälters B1, B2 und B3 befindet.

Dementsprechend löst ein die Detektionsfläche Df passierendes Objekt O1, O2 und O3 ein Erfassungssignal ES des zweiten Sensors S2 aus. Somit ist das Objekt O1, O2 und O3 exakt in dem jeweiligen Behälter B1, B2 und B3 gezählt und diesem auch korrekt zugewiesen.

Die Steuereinheit 3 wertet vorzugsweise das Identifizierungssignal IS und das Erfassungssignal ES aus und erzeugt ein erstes Sortierungssignal, das eine korrekte Sortierung des Objektes O1, O2 und O3 in dem zugeordneten Behälter B1, B2 und B3 wiedergibt, wenn das Objekt O1, O2 und O3 in einem ihm zugeordneten Behälter B1, B2 und B3 das Erfassungssignal ES auslöst.

Das heißt, wenn beispielsweise das Objekt O1 identifiziert und dem Behälter B1 zugeordnet ist, muss das Erfassungssignal ES des zweiten Sensors S2 durch das Objekt O1 in dem Behälter B1 ausgelöst sein, damit die Steuerung 3 das erste Sortierungssignal für die korrekte Sortierung erzeugt. Hierbei löst das erste Sortierungssignal vorzugsweise ein grünes Licht an der Anzeige A1 des Behälters B1 aus.

Wenn das erzeugte Erfassungssignal ES durch das Objekt O1 in einem anderen als dem ihm zugeordneten Behälter B2 oder B3 ausgelöst sein sollte, dann erzeugt die Steuereinheit 3 ein zweites Sortierungssignal, das eine falsche Sortierung des Objektes O1 wiedergibt, wobei vorzugsweise das zweite Sortierungssignal ein rotes Licht an der Anzeige A2 oder A3 des Behälters B2 oder B3 auslöst.

Insbesondere ist wie in diesem Ausführungsbeispiel dargestellt, die Detektionsfläche Df des zweiten Sensors S2 durch die drei Behälter B1 bis B3 in drei Bereiche unterteilt, wobei jeder Bereich klar dem jeweiligen Behälter B1 bis B3 zuordenbar ist. Durch Passieren des Objektes O1, O2 und O3 durch eines der drei Bereiche der Detektionsfläche Df kann die Steuereinheit 3 den Eingang des Objektes O1, O2 und O3 zu dem jeweiligen Behälter B1, B2 oder B3 exakt zuordnen.

Hierdurch ist eine sichere Erfassung einer korrekten oder falschen Sortierung der Objekte O1 bis O3 zu den jeweiligen zugeordneten Behältern B1 bis B3 gewährleistet und eine einfache Nachverfolgung einer falschen Sortierung durch die optischen Anzeige 4a bis 4c durchführbar.

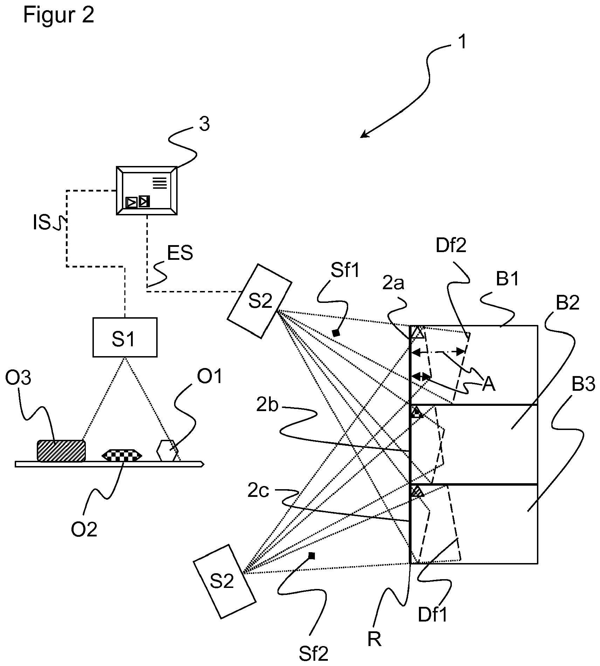

Figur 2 zeigt schematisch ein zweites bevorzugtes Ausführungsbeispiel des Sortierungserfassungssystems 1. Bei diesem Ausführungsbeispiel gehören die Behälter B1 bis B3 zu einem Logistikregal, die auf unterschiedlichen Ebenen zueinander angeordnet sind. Die gleichen Elemente, wie bei dem ersten Ausführungsbeispiel, sind mit den gleichen Bezugszeichen versehen und werden im Folgenden nicht erneut in Detail beschrieben.

Auf die Behälter B1 bis B3 sind bei diesem Ausführungsbeispiel insbesondere zwei zweite Sensoren S2 gerichtet, die in unterschiedlichen Winkeln zu den Behältern B1 bis B3 angeordnet sind. Hierdurch sind zwei Sichtfelder Sf1 und Sf2 durch die beiden zweiten Sensoren S2 auf die Öffnungen 2a bis 2c der Behälter B1 bis B3 gerichtet. Jedes Sichtfeld Sf1 und Sf2 weist jeweils eine Detektionsfläche Df1 und Df2 auf, die in unterschiedlichen Winkeln zu den Öffnungen 2a bis 2c der Behälter B1 bis B3 angeordnet sind.

Die Objekte O1 bis O3 sind, wie bei dem vorherigen Ausführungsbeispiel beschrieben, durch den ersten Sensor S1 identifiziert, so dass die Steuereinheit 3 das identifizierte Objekt O1, O2 und O3 anhand des Identifizierungssignals IS dem jeweiligen Behälter B1, B2 oder B3 zuordnet.

Wie aus der Figur 2 ersichtlich, ermöglichen die beiden Detektionsfläche Df1 und Df2 der beiden zweite Sensoren S2 ein lückenloses Erfassen der Bereiche nach den jeweiligen Öffnungen 2a bis 2c aus zwei unterschiedlichen Winkeln, so dass die Detektionsfläche Df1 und Df2 insbesondere in entsprechend unterschiedliche Tiefen nach dem Rand R der Öffnungen 2a bis 2c liegen. Das heißt, durch die Anordnung der beiden zweite Sensoren S2 hat eine Abschattung der Sichtfelder Sf1 und Sf2 durch den Aufbau der Behälter B1 bis B3 keine negative Auswirkung auf die Erfassungsfähigkeit des Sortierungserfassungssystems 1.

Der vorgegebene Abstand A der Detektionsfläche Df1 und Df2 zu dem Rand R der jeweiligen Öffnungen 2a bis 2c ist insbesondere in Abhängigkeit von einem Abstand der jeweiligen Öffnungen 2a bis 2c zu den zweiten Sensoren S2 unterschiedlich groß eingestellt.

Das heißt, für den Behälter B1 ist beispielsweise der Abstand A der Detektionsfläche Df2 des (auf die Figur 2 bezogen) oberen zweiten Sensors S2 zum Rand R der Öffnung 2a größer als der Abstand A der Detektionsfläche Df1 des (auf die Figur 2 bezogen) unteren zweiten Sensors S2, da der obere zweite Sensor S2 näher an der Öffnung 2a als der untere zweite Sensor S2 angeordnet ist. Hierdurch ist eine Parametrisierung der Detektionsflächen Df1 und Df2 vereinfacht, da die Detektionsfläche Df1 und Df2 als eine gerade zweidimensionale (2D-) Ebene vorgegeben werden kann, die eine definierte Entfernung zum jeweiligen zweiten Sensor S2 aufweist.

Mit anderen Worten, jeder zweite Sensor S2 ist derart eingestellt, dass jeder Behälter B1, B2 und B3 jeweils seine individuell eingestellte Teildetektionsfläche aufweist, wobei sich aus allen Teildetektionsflächen zusammen die Detektionsfläche Df1 bzw. Df2 des zweiten Sensors S2 ergibt. Hierbei weisen die individuellen Teildetektionsflächen im Vergleich zueinander gleich oder unterschiedlich große Abstände A zu der jeweiligen Öffnung 2a, 2b und 2c ihres jeweiligen Behälters B1, B2 und B3 auf.

Wenn das identifizierte Objekt O1, O2 und O3 die entsprechend zugeordnete Öffnung 2a, 2b oder 2c des jeweiligen Behälters B1, B2 oder B3 passiert, dann löst das Objekt O1, O2 und O3 bei dem oberen, unteren zweiten Sensor S2 oder bei beiden zweiten Sensoren S2 das Erfassungssignal ES aus. Anhand des ausgelösten Erfassungssignals ES kann die Sortierung bewertet werden. Mittels eines Vergleichs der beiden ausgelösten Erfassungssignale ES kann zusätzlich die Betriebsbereitschaft der beiden zweiten Sensoren S2 überprüft werden.

Das heißt, beispielweise beim Eingang des Objektes O1 in dem zugeordneten Behälter B1 muss das Objekt O1, wenn es durch den oberen Rand R der Öffnung 2a des Behälters B1 durchgeht, jeweils ein Erfassungssignal ES bei den beiden zweiten Sensoren S2 auslösen, da es beide Detektionsflächen Df1 und Df2 passiert. Das Objekt O1 löst jedoch nur ein Erfassungssignal ES beim oberen zweiten Sensor S2 aus, wenn es durch den unteren Rand R der Öffnung 2a des Behälters B1 durchgeht, da der untere zweite Sensor S2 in diesem Bereich des Behälters B1 eine Abschattung seiner Detektionsfläche Df1 aufweist.

Das Sortierungserfassungssystem 1 ist somit trotz der Anordnung der zweiten Sensoren S2 zu den Behältern B1 bis B3 in der Lage, den Eingang der Objekte O1 bis O3 in den jeweiligen Behältern B1 bis B3 sicher zu erfassen und eine korrekte oder falsche Sortierung der Objekte O1 bis O3 zu unterscheiden.

Beim ersten und zweiten bevorzugten Ausführungsbeispiel des Sortierungserfassungssystems 1 ist der zweite Sensor S2 vorzugsweise derart ausgebildet, dass das durch das Sichtfeld Sf, Sf1 bzw. Sf2 beförderte Objekt O1, O2 und O3 zusätzlich identifiziert werden kann. Hierbei führt der zweite Sensor S2 die Identifizierung des Objektes O1, O2 und O3, wie der erste Sensor S1, anhand des optischen Markers an dem Objekt O1, O2 und O3 und/oder des strukturellen Merkmals des Objektes O1, O2 und O3 aus. Für den Fall, dass der erste Sensor S1 ein RFID-Lesegerät umfasst, wird das Objekt O1, O2 und O3 anhand eines RFID-Chips an dem Objekt O1, O2 und O3 identifiziert.

Dadurch ist die Identifizierung des Objektes O1, O2 und O3 durch den ersten Sensor S1 nachprüfbar.

Ferner umfasst der erste Sensor S1 einen Scanner, einen Barcodelese-Sensor, ein RFID-Lesegerät oder eine 2D-Kamera. Der zweite Sensor S2 umfasst ein 3D-Time of Flight (TOF-) System, eine 3D-Stereokamera, eine 3D-Stereokamera in Kombination mit strukturiertem Licht, oder einen 3D-Laserscanner. Mittels dieses verwendbaren zweiten Sensors S2 lassen sich das Sichtfeld Sf, Sf1 und Sf2 und die Detektionsflächen Df, Df1 und Df2 exakt und einfach einstellen, so dass ein Einrichten des Sortierungserfassungssystems 1 leicht durchzuführen ist.

Insbesondere ist das Sortierungserfassungssystem 1 in ein bestehendes Sortierungssystem mit wenig Aufwand integrierbar.

### Bezugszeichenliste

- 1: Sortierungserfassungssystem
- 2a, 2b, 2c: Öffnung
- 3: Steuereinheit
- 4a, 4b, 4c: Optische Anzeige
- A: Vorgegebener Abstand
- B1, B2, B3: Behälter
- Df, Df1, Df2: Detektionsfläche
- ES: Erfassungssignal
- IS: Identifizierungssignal
- O1, O2, O3: Objekt
- R: Rand
- S1: Erster Sensor
- S2: Zweiter Sensor
- Sf, Sf1, Sf2: Sichtfenster

## Patentansprüche

1. Sortierungserfassungssystem (1) zum Erfassen eines Passierens eines Objektes (O1, O2, O3) durch eine von mehreren Öffnungen (2a bis 2c), wobei jede Öffnung (2a, 2b, 2c) einem Behälter (B1, B2, B3) zugeordnet ist, umfassend:
die Behälter (B1 bis B3) zum Aufnehmen des Objektes (O1, O2, O3), zumindest einen ersten Sensor (S1), der das Objekt (O1, O2, O3) identifiziert und ein Identifizierungssignal (IS) erzeugt,
eine Steuereinheit (3), die das Identifizierungssignal (IS) des ersten Sensors (S1) erhält und das identifizierte Objekt (O1, O2, O3) anhand des Identifizierungssignals (IS) einem Behälter (B1, B2, B3) zuordnet, und zumindest einen zweiten Sensor (S2),
**dadurch gekennzeichnet, dass** der zweite Sensor (S2) ein 3D-Time of Flight (TOF) System, eine 3D-Stereokamera, eine 3D-Stereokamera in Kombination mit strukturiertem Licht, oder einen 3D-Laserscanner umfasst und mit einem Sichtfeld (Sf; Sf1, Sf2) versehen ist, das auf die Öffnungen (2a bis 2c) gerichtet ist und wenigstens eine Detektionsfläche (Df; Df1, Df2) umfasst,
wobei die Detektionsfläche (Df; Df1, Df2) mit einem vorgegebenen Abstand (A) zu einem Rand (R) einer jeweiligen Öffnung (2a, 2b, 2c) innerhalb des jeweiligen Behälters (B1, B2, B3) liegt, und
ein die Detektionsfläche (Df; Df1, Df2) passierendes Objekt (O1, O2, O3) ein Erfassungssignal (ES) des zweiten Sensors (S2) auslöst.

2. Sortierungserfassungssystem (1) nach Anspruch 1, **dadurch gekennzeichnet, dass** der erste Sensor (S1) einen Scanner, einen Barcodelese-Sensor, eine 2D-Kamera oder ein RFID-Lesegerät umfasst.

3. Sortierungserfassungssystem (1) nach Anspruch 1 oder 2, **dadurch gekennzeichnet, dass** die Steuereinheit (3) anhand des Identifizierungssignals (IS) eine optische Anzeige (4a, 4b, 4c) an dem zugeordneten Behälter (B1, B2, B3) aktiviert oder ein Projektor anhand des Identifizierungssignals (IS) die Öffnung (2a, 2b, 2c) des zugeordneten Behälters (B1, B2, B3) indiziert, um die Zuordnung des identifizierten Objektes (O1, O2, O3) zu dem jeweiligen Behälter (B1, B2, B3) optisch anzuzeigen.

4. Sortierungserfassungssystem (1) nach zumindest einem der vorhergehenden Ansprüche 1 bis 3, **dadurch gekennzeichnet, dass** die Steuereinheit (3) das Identifizierungssignal (IS) und das Erfassungssignal (ES) auswertet, um ein erstes Sortierungssignal zu erzeugen, das eine korrekte Sortierung des Objektes (O1, O2, O3) in einen dem Objekt (O1, O2, O3) zugeordneten Behälter (B1, B2, B3) wiedergibt, wenn das Objekt (O1, O2, O3) in einem ihm zugeordneten Behälter (B1, B2, B3) das Erfassungssignal (ES) auslöst, oder um ein zweites Sortierungssignal zu erzeugen, das eine falsche Sortierung des Objektes (O1, O2, O3) wiedergibt, wenn das Objekt (O1, O2, O3) in einem anderen als dem ihm zugeordneten Behälter (B1, B2, B3) das Erfassungssignal (ES) auslöst.

5. Sortierungserfassungssystem (1) nach Anspruch 4, **dadurch gekennzeichnet, dass** die Steuereinheit (3) anhand des Sortierungssignals eine optische Anzeige (4a, 4b, 4c) an dem das Objekt (O1, O2, O3) aufgenommenen Behälter (B1, B2, B3) aktiviert oder ein Projektor anhand des Sortierungssignals die jeweilige Öffnung (2a, 2b, 2c) indiziert, um die Sortierung des Objektes (O1, O2, O3) in diesem Behälter (B1, B2, B3) optisch als korrekt oder falsch anzuzeigen.

6. Sortierungserfassungssystem (1) nach einem der vorhergehenden Ansprüche 1 bis 5, **dadurch gekennzeichnet, dass** der Behälter (B1, B2, B3) zu einem Logistikregal mit mehreren Behältern (B1 bis B3) gehört, die auf einer gleichen Ebene oder auf unterschiedliche Ebenen zueinander angeordnet sind.

7. Sortierungserfassungssystem (1) nach zumindest einem der vorhergehenden Ansprüche 1 bis 6, **dadurch gekennzeichnet, dass** der zweite Sensor (S2) derart ausgebildet ist, dass das durch das Sichtfeld (Sf; Sf1, Sf2) beförderte Objekt (O1, O2, O3) mit diesem identifizierbar ist.

8. Sortierungserfassungssystem (1) nach zumindest einem der vorhergehenden Ansprüche 1 bis 7, **dadurch gekennzeichnet, dass** die Öffnungen (2a bis 2c) in unterschiedlichen Entfernungen zu dem zweiten Sensor (S2) angeordnet sind.

9. Sortierungserfassungssystem (1) nach zumindest einem der vorhergehenden Ansprüche 1 bis 8, **dadurch gekennzeichnet, dass** der zweite Sensor (S2) derart eingestellt ist, dass jeder Behälter (B1, B2, B3) jeweils seine individuell eingestellte Detektionsfläche (Df; Df1, Df2) aufweist.

10. Sortierungserfassungssystem (1) nach Anspruch 9, **dadurch gekennzeichnet, dass** die individuellen Detektionsflächen (Df; Df1, Df2) im Vergleich zueinander gleich oder unterschiedlich große Abstände (A) zu der Öffnung (2a, 2b, 2c) ihres jeweiligen Behälters (B1, B2, B3) aufweisen.

11. Sortierungserfassungssystem (1) nach Anspruch 9 oder 10, **dadurch gekennzeichnet, dass** die oder jede Detektionsfläche (Df; Df1, Df2) eine plane, zweidimensionale Ebene bildet.

12. Sortierungserfassungssystem (1) nach einem der vorhergehenden Ansprüche 1 bis 11, **dadurch gekennzeichnet, dass** die Identifizierung des Objektes (O1, O2, O3) anhand eines optischen Markers, insbesondere einem Barcode an dem Objekt (O1, O2, O3), eines strukturellen Merkmals des Objektes (O1, O2, O3) und/oder eines RFID-Chips an dem Objekt (O1, O2, O3) durchführbar ist.

## Claims

1. Sorting detection system (1) for detecting passage of an object (O1, O2, O3) through one of a plurality of openings (2a to 2c), each opening (2a, 2b, 2c) being associated with a container (B1, B2, B3), comprising:
the containers (B1 to B3) for receiving the object (O1, O2, O3),
at least a first sensor (S1) identifying the object (O1, O2, O3) and generating an identification signal (IS)
a control unit (3) which receives the identification signal (IS) of the first sensor (S1) and assigns the identified object (O1, O2, O3) to a container (B1, B2, B3) on the basis of the identification signal (IS), and
at least a second sensor (S2),
**characterized in that** the second sensor (S2) comprises a 3D Time of Flight (TOF) system, a 3D stereo camera, a 3D stereo camera in combination with structured light, or a 3D laser scanner and comprises a field of view (Sf; Sf1, Sf2) directed towards the openings (2a to 2c) and comprises at least one detection surface (Df; Df1, Df2),
the detection surface (Df; Df1, Df2) being located at a predetermined distance (A) from an edge (R) of a respective opening (2a, 2b, 2c) within the respective container (B1, B2, B3), and
an object (O1, O2, O3) passing the detection surface (Df; Df1, Df2) triggers a detection signal (ES) of the second sensor (S2).

2. Sorting detection system (1) according to claim 1, **characterized in that** the first sensor (S1) comprises a scanner, a barcode reading sensor, a 2D camera or an RFID reader.

3. Sorting detection system (1) according to claim 1 or 2, **characterized in that** the control unit (3) uses the identification signal (IS) to activate an optical display (4a, 4b, 4c) on the associated container (B1, B2, B3) or a projector indicates the opening (2a, 2b, 2c) of the associated container (B1, B2, B3) on the basis of the identification signal (IS) in order to visually indicate the assignment of the identified object (O1, O2, O3) to the respective container (B1, B2, B3).

4. Sorting detection system (1) according to at least one of the preceding claims 1 to 3, **characterized in that** the control unit (3) evaluates the identification signal (IS) and the detection signal (ES) to generate a first sorting signal representing a correct sorting of the object (O1, O2, O3) into a container (B1, B2, B3) associated with the object (O1, O2, O3) when the object (O1, O2, O3) in its associated container (B1, B2, B3) triggers the detection signal (ES), or to generate a second sorting signal representing an incorrect sorting of the object (O1, O2, O3) if the object (O1, O2, O3) triggers the detection signal (ES) in a container (B1, B2, B3) other than the associated one.

5. Sorting detection system (1) according to claim 4, **characterized in that** the control unit (3) activates an optical indicator (4a, 4b, 4c) on the container (B1, B2, B3) receiving the object (O1, O2, O3) on the basis of the sorting signal, or a projector indicates the respective opening (2a, 2b, 2c) on the basis of the sorting signal, in order to optically indicate the sorting of the object (O1, O2, O3) in this container (B1, B2, B3) as correct or incorrect.

6. Sorting detection system (1) according to any of the preceding claims 1 to 5, **characterized in that** the container (B1, B2, B3) belongs to a logistics rack comprising a plurality of containers (B1 to B3) arranged on the same level or on different levels with respect to each other.

7. Sorting detection system (1) according to at least one of the preceding claims 1 to 6, **characterized in that** the second sensor (S2) is designed such that the object (O1, O2, O3) conveyed through the field of view (Sf; Sf1, Sf2) can be identified with it.

8. Sorting detection system (1) according to at least one of the preceding claims 1 to 7, **characterized in that** the openings (2a to 2c) are arranged at different distances from the second sensor (S2).

9. Sorting detection system (1) according to at least one of the preceding claims 1 to 8, **characterized in that** the second sensor (S2) is set in such a way that each container (B1, B2, B3) has respectively its individually set detection area (Df; Df1, Df2).

10. Sorting detection system (1) according to claim 9, **characterized in that** the individual detection areas (Df; Df1, Df2) have equal or different distances (A) to the opening (2a, 2b, 2c) of their respective container (B1, B2, B3) compared to each other.

11. Sorting detection system (1) according to claim 9 or 10, **characterized in that** the or each detection surface (Df; Df1, Df2) forms a planar, two-dimensional plane.

12. Sorting detection system (1) according to any of the preceding claims 1 to 11, **characterized in that** the identification of the object (O1, O2, O3) is feasible by means of an optical marker, in particular a barcode on the object (O1, O2, O3), a structural feature of the object (O1, O2, O3) and/or an RFID chip on the object (O1, O2, O3).

## Revendications

1. Système de détection de tri (1) pour détecter le passage d'un objet (O1, O2, O3) à travers l'une d'une pluralité d'ouvertures (2a à 2c), chaque ouverture (2a, 2b, 2c) étant associée à un conteneur (B1, B2, B3), comprenant:
les conteneurs (B1 à B3) destinés à recevoir l'objet (O1, O2, O3),
au moins un premier capteur (S1) identifiant l'objet (O1, O2, O3) et générant un signal d'identification (IS)
une unité de commande (3) qui reçoit le signal d'identification (IS) du premier capteur (S1) et affecte l'objet identifié (O1, O2, O3) à un conteneur (B1, B2, B3) sur la base du signal d'identification (IS), et
au moins un deuxième capteur (S2),
**caractérisé en ce que** le deuxième capteur (S2) comprend un système 3D à temps de vol (TOF), une caméra stéréo 3D, une caméra stéréo 3D en combinaison avec une lumière structurée ou un scanner laser 3D et est pourvu d'un champ de vision (Sf; Sf1, Sf2) qui est dirigé vers les ouvertures (2a à 2c) et comprend au moins une zone de détection (Df; Df1, Df2).
la zone de détection (Df; Df1, Df2) étant située à une distance prédéterminée (A) d'un bord (R) d'une ouverture respective (2a, 2b, 2c) à l'intérieur du conteneur respectif (B1, B2, B3), et
un objet (O1, O2, O3) passant la zone de détection (Df; Df1, Df2) déclenche un signal de détection (ES) du deuxième capteur (S2).

2. Système de détection de tri (1) selon la revendication 1, **caractérisé en ce que** le premier capteur (S1) comprend un scanner, un lecteur de code à barres, une caméra 2D ou un lecteur RFID.

3. Système de détection de tri (1) selon la revendication 1 ou 2, **caractérisé en ce que** l'unité de commande (3) active un affichage optique (4a, 4b, 4c) sur le conteneur associé (B1, B2), B3) au moyen du signal d'identification (IS) ou un projecteur indique l'ouverture (2a, 2b, 2c) du conteneur associé (B1, B2, B3) au moyen du signal d'identification (IS) afin d'indiquer visuellement l'affectation de l'objet identifié (O1, O2, O3) au conteneur respectif (B1, B2, B3).

4. Système de détection de tri (1) selon au moins l'une des revendications précédentes 1 à 3, **caractérisé en ce que** l'unité de commande (3) évalue le signal d'identification (IS) et le signal de détection (ES) pour générer un premier signal de tri représentant un tri correct de l'objet (O1, O2, O3) dans un conteneur (B1, B2, B3) associé à l'objet (O1, O2, O3) lorsque l'objet (O1, O2, O3) dans un conteneur (B1, B2, B3) qui lui est associé déclenche le signal de détection (ES), ou pour générer un second signal de tri représentant un tri incorrect de l'objet (O1, O2, O3) lorsque l'objet (O1, O2, O3) dans un conteneur (B1, B2, B3) autre que le conteneur (B1, B2, B3) qui lui est associé déclenche le signal de détection (ES).

5. Système de détection de tri (1) selon la revendication 4, **caractérisé en ce que** l'unité de commande (3) active un indicateur visuel (4a, 4b, 4c) sur le conteneur (B1, B2, B3) recevant l'objet (O1, O2, O3) sur la base du signal de tri ou un projecteur indique l'ouverture respective (2a, 2b, 2c) sur la base du signal de tri afin d'indiquer visuellement le tri de l'objet (O1, O2, O3) dans ce conteneur (B1, B2, B3) comme correct ou incorrect.

6. Système de détection de tri (1) selon l'une des revendications précédentes 1 à 5, **caractérisé en ce que** le conteneur (B1, B2, B3) appartient à un rack logistique comprenant une pluralité de conteneurs (B1 à B3) disposés sur un même niveau ou sur des niveaux différents les uns par rapport aux autres.

7. Système de détection de tri (1) selon au moins l'une des revendications précédentes 1 à 6, **caractérisé en ce que** le deuxième capteur (S2) est conçu de telle sorte que l'objet (O1, O2, O3) transporté à travers le champ de vision (Sf; Sf1, Sf2) peut être identifié à celui-ci.

8. Système de détection de tri (1) selon au moins l'une des revendications précédentes 1 à 7, **caractérisé en ce que** les ouvertures (2a à 2c) sont disposées à des distances différentes du deuxième capteur (S2).

9. Système de détection de tri (1) selon au moins l'une des revendications précédentes 1 à 8, **caractérisé en ce que** le deuxième capteur (S2) est réglé de telle sorte que chaque conteneur (B1, B2, B3) a sa zone de détection respective réglée individuellement (Df; Df1, Df2).

10. Système de détection de tri (1) selon la revendication 9, **caractérisé en ce que** les zones de détection individuelles (Df; Df1, Df2) ont des distances (A) égales ou différentes par rapport à l'ouverture (2a, 2b, 2c) de leur conteneur respectif (B1, B2, B3) les unes par rapport aux autres.

11. Système de détection de tri (1) selon la revendication 9 ou 10, **caractérisé en ce que** la ou chaque zone de détection (Df; Df1, Df2) forme un plan plat et bidimensionnel.

12. Système de détection de tri (1) selon l'une des revendications précédentes 1 à 11, **caractérisé en ce que** l'identification de l'objet (O1, O2, O3) est réalisable au moyen d'un marqueur optique, notamment un code à barres sur l'objet (O1, O2, O3), d'une caractéristique structurelle de l'objet (O1, O2, O3) et/ou d'une puce RFID sur l'objet (O1, O2, O3).
